# EUROPEAN PATENT APPLICATION

(11) **EP 2 080 456 A1**
(43) Date of publication of application: **22.07.2009**
(21) Application number: 08250253.5
(22) Date of filing: 19.01.2008
(51) Int. Cl.: A47J 31/42

(54) **Coffee machine and its components**

(71) Applicant: Lian-Bao, Wu, Bali Township, Taipei County 249 (TW)
(72) Inventor: Lian-Bao, Wu, Bali Township, Taipei County 249 (TW)
(74) Representative: Brown, Michael Stanley

(57) **Abstract**

The present invention provides a type of coffee machine and its component, which mainly compromises internally installed grinding component, heating component, brewing component and foam-producing component controlled by electric circuit. The whole process of grinding coffee beans and coffee brewing is accomplished by the consecutive operations of various components driven by different actions of a motor. And, except for the noise of grinding coffee beans, no other action of the coffee machine will produce any noise in the whole operational process.

## Description

### BACKGROUND OF INVENTION

### (1) FIELD OF THE INVENTION

The present invention relates generally to an automatic coffee machine, and more particularly to an innovative one which automatically accomplishes the coffee making steps of grinding, brewing and grounds-discharging by its components and is able to add milk foam on the coffee prepared as required.

### (2) DESCRIPTION OF THE PRIOR ARTS

Among various types of coffee machines, the automatic grinding coffee machine is the most favorite one to general households and coffee shops. For example, US6901846 patent discloses a type of coffee machine, compromising a coffee bean mill, sliding brewing unit, water-heating unit, water storage unit, coffee grounds collector and control electric circuit sealed in the machine shell. Thereinto, the sliding collecting pattern of the brewing unit may easily pollute the surroundings of the coffee machine. In addition, no design of adding milk foam is available.

The whole operational process of the current automatic grinding coffee machines is completed by components controlled by a motor. Various coffee machine components working on specific tracks will produce unbearable noise in the operational process.

Generally speaking, coffee with milk foam will increase flavor, especially in case of Italian coffee. However, at present, milk foam has to be produced in a machine separate from the automatic brewing machine as illustrated by US20060236874 patent.

All the components of such milk foam maker contact the milk products. And the machine has to be dismantled for cleaning after use to prevent bacterial growth or growing some bad milk products. Meanwhile, most machine components are made of metallic materials and will produce extremely high temperature during the coffee brewing process. It is very dangerous and inconvenient as the user dismantling the coffee machine for cleaning may get burns.

Therefore, the inventor has provided an automatic coffee machine which can accomplish the whole coffee making process with function of adding milk foam on coffee as required.

### SUMMARY OF THE INVENTION

The main objective of the present invention is to provide a coffee machine with a grinding component, heating component and brewing component as well as foam producing component all comprised and sealed in one machine shell.

Another objective of the present invention is to provide types of coffee machine components, which work under the control of three different actions of a motor. As a result, all the operations in the whole coffee making process except for grinding coffee beans will not produce any noise.

Another objective of the present invention is to provide types of coffee machine components. As the tube used in the foam producing component are metallic and will not contact any milk products in the coffee making process, it is unnecessary to dismantle the machine for cleaning.

### BRIEF DESCRIPTION OF THE DRAWINGS

Figure 1 shows a perspective application view of the present invention - a coffee machine.
Figure 2 shows a concrete view of the coffee machine as presented in Figure 1 with its shell removed.
Figure 3 shows a bird view of the grinding component and the brewing component as presented in Figure 2.
Figure 4 shows a sectional view along with A-A line as presented in Figure 3 of the grinding component.
Figure 5 shows a sectional view along with B-B line as presented in Figure 3 of the brewing component.
Figure 6 shows a concrete view of the relativity of the leading tube and the brewing component.
Figure 7 shows a bird view of the relativity of the rotary plate and the leading tube.
Figure 8 shows an angular sectional view of the foam producing component as presented in Figure 2.
Figure 9 shows another angular sectional view of the foam producing component as presented in Figure 2.

### DETAILED DESCRIPTION OF THE PREFERRED EMBODIMENTS

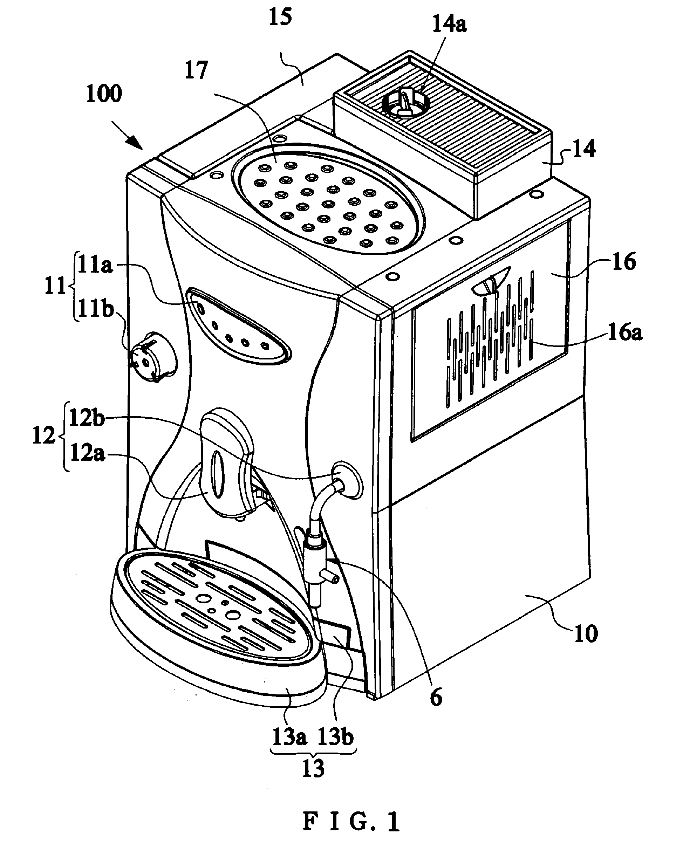

Figure 1 depicts the coffee machine 100 based on the aforesaid invention, compromising: an assembled machine shell 10 with a control unit 11, an end product unit 12, a grounds/extracts unit13, a filling box 14, an injection unit 15, a door 16 and an airing unit 17.

The control unit 11 located on the front of the shell 10 comprises a keystroke panel 11 a and a knob 11 b. The keystroke panel 11 a has a couple of outstanding keys, each of which is able to send a message to the electric circuits to order the coffee machine 100 to automatically implement the given coffee making step and control the time or steps of the whole process. In respect to the knob 11 b, it is mainly to manually control the foam producing component, the amount of the operational flow or the fluid brewing time.

The end product unit 12 located on the front of the shell 10 comprises a flow path 12a and an outlet 12b. The flow path 12a is defined as the path to lead out the liquids after completing the aforementioned brewing operations. In respect to the outlet 12b, it is defined as the outlet for the pressed liquids manually controlled by the aforementioned knob 11 b.

The grounds/extracts unit13 compromises a tray 13a connected with a box 13b. The box 13b is usually pushed into shell 10 to collect all the grounds of the aforementioned brewing operations for trash or residue treatment. Tray 13a connected with box 13b stands out exactly under the shell 10 front. The tray 13a is a penetrating plate with punch holes at the outlet. The main purpose of tray 13a is to: place a cup to receive liquids from flow path 12a.

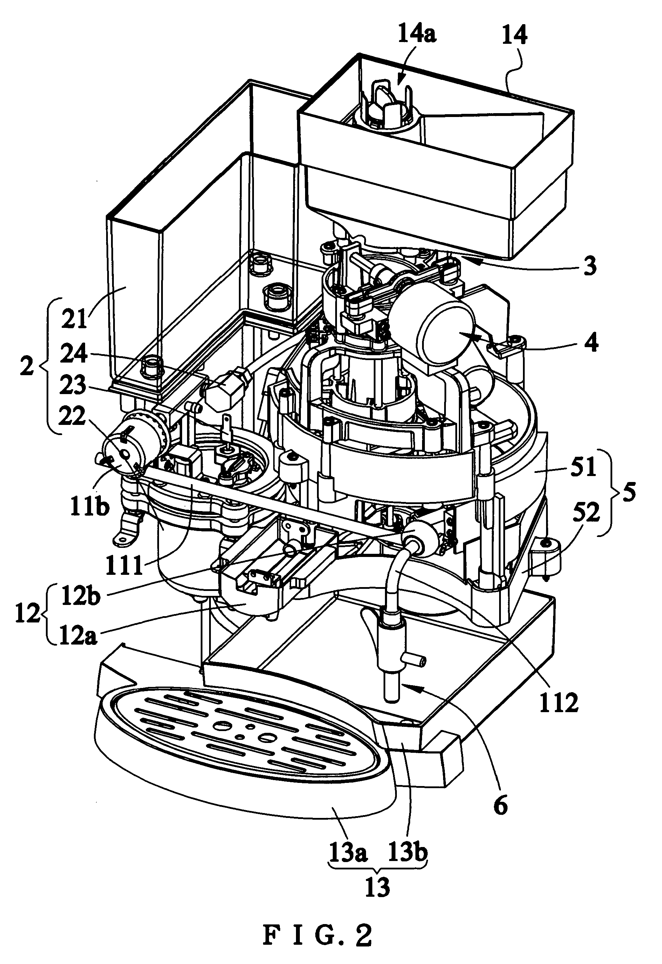

The filling box 14 located on the back of shell 10, as seen from Figure 2, has two spaces for filling original materials as well as an adjuster 14a located on the border of the two spaces connecting with a grinding component t3. Correspondingly, the adjuster can adjust or control the coffee bean number or adding speed into the grinding component 3. The aforementioned original materials are mainly of coffee beans necessary for coffee brewing. Coffee beans are multiple in varieties and taste differently. Depending on personal taste, one or more than one type of coffee beans can be poured into the two spaces of the filling box 14 to moderate the taste of the aforementioned liquids brewed. In addition, it is better to cover the filling box 14 outlet to prevent original materials from pollution or ejection.

The injection unit 15 located on a side of shell 10 is for complimentary pouring of liquids, which can be the drinking water necessary for coffee brewing. Of course, it is better to cover the injection unit 15 outlet to ensure the protection of the liquids from pollution.

The door 16 located on the other side of shell 10 opposite to the injection unit 15 is mainly for machine internal maintenance purposes and is usually shut down. The door 16 or shell 10 has a hole 16a, from which heat produced in machine operations can be let out.

The airing unit 17 located on the top of shell 10 is a penetrating plate with punched holes at its outlet to hold cups inversely.

The aforesaid coffee making operational process is the core of the present invention. It can be seen as from Figure 2 that the coffee making process is completed by a heating component 2, a grinding component 3 and a brewing component 4 related.

The heating component 2 as illustrated in Figure 2 comprises at least a tank 21 and a stove 22. The tank 21 located in the place as that of the aforementioned injection unit 15 for pouring in drinking water. Liquids stored in tank 21 can be directed to the stove 22 with a heater 23, of which the penetrating portion into to the stove22 is a type of electric heating tube. According to the message sent out by the aforementioned control unit 11 press keys, the electric circuits will start the heater 23 to boil the liquids in the tank by stove 22. The pump (not depicted in the figure) will pump out the high temperature liquids to a discharging valve 24. The valve 24 is a single direction valve, making the high pressure liquids flow only to the brewing component 4 but not able to flow reversely back to stove 22.

The grinding component 3 and the brewing component 4 are assembled in a same stand combination 5 located on top of the aforementioned box 13b of the grounds/extracts unit 13. It comprises a first stand 51 and a secondary stand 52, both of which are fixed inside shell 10. The secondary stand52 is located below the first stand51.

The grinding component 3 installed in the combination stand 5 below the aforementioned filling box 14 mainly functions to: receive original materials poured down from the filling box 14 for grinding into grounds. Original materials in particle concentrate loosely in the brewing component 4. Displacement pressing will make the particle density higher and add the aforementioned high pressure liquids to brew coffee with tastes of original materials. The liquid coffee will be directed out through the aforementioned flow path 12a to the cup placed on the tray13a.

The drinker can move the cup with coffee to the aforementioned outlet 12b, which is connected with a foam producing component 6. Turn the aforementioned knob 11 b to direct the high pressure liquids into the foam producing component 6 through tube 111. The high pressure liquids will absorb liquid milk products from outside by the siphon principle to create small bubbles in the foam producing component 6 to form foams on top of coffee in the cup.

The aforementioned structural operations are conducted by three different control motors by section. In the whole operational process, except for noise produced in grinding coffee beans, all the operations will not produce any noise.

Next, the relevant internal structures of the grinding component 3 and the brewing component 4 are deliberated as follows.

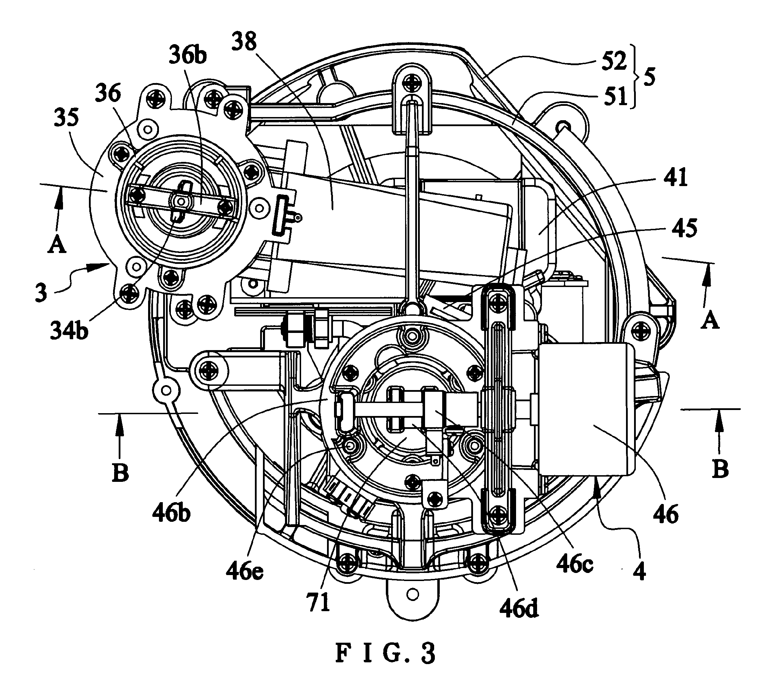

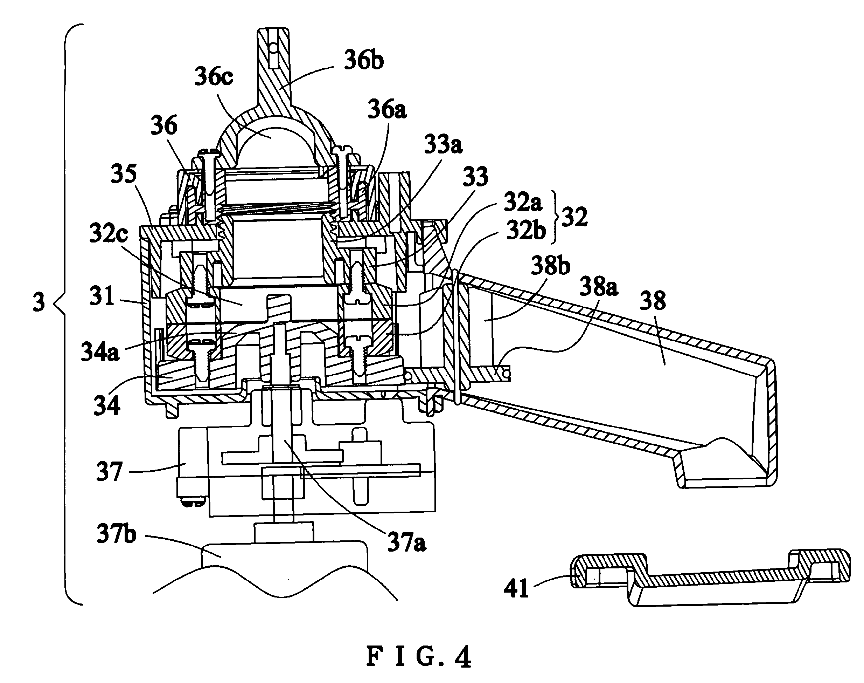

Figure 3 shows the bird view of the present invention. As shown in the Figure, the grinding component 3 is located on left top of the brewing component 4. Together with Figure 4, it can be clearly understood that said grinding component 3 compromises a tube 31, a tube lid 35, a fastening ring 36, a gear box 37 and a leading tube 38.

Inside said tube 31, there is a set of blade mills 32, which comprises ring-shaped the first blade mill 32a and the second blade mill 32b. The two blade mills 32a, 32b are opposite to each other inside tube 31 and form a grinding space 32c at the ring center. Therein, the first blade mill 32a is on top of the second blade mill 32b and is fastened on the bottom of the mill seat 33, in the center of which, a tube-shaped screw connection 33a vertical to the top plane forms. One of the ends of said screw connection 33a facing the first blade mill 32a is connected with the grinding space 32c. The second blade mill 32b is fastened on top of blade seat 34, in the center of which, an outstanding connection portion 34a penetrates into the ring center of the second blade mill 32b. There is at least one blade 34b on top of the connection portion 34a and the blade 34b is exactly located inside the aforementioned grinding space 32c.

The tube lid 35 covers the upper outlet of tube 31 and the two are fastened as a whole to allow the screw connection portion 33a of the mill seat 33 to go through the tube lid 35, which is assembled with the aforementioned filling box 14.

The fastening ringv36 is locked on the top plane of the tube lid 35 with a sliding adjustment ring 36a set in between. The adjustment ring 36a is connected with an adjustment knob on its top and these two form two entrances 36c, each of which is connected with the original material feeding space of the aforementioned filling box 14. By said adjuster 14a, the self-rotation of the adjustment knob 36b can be controlled to fit the adjustment ring 36a with the screw connection 33a of the mill seat 33.

Inside the gear box 37, multiple gears fit and connect with each other to make the axis shaft 37a of the blade seat 34 self rotate. The grinding motor at the bottom of the gear box 37b connects with gears inside the gear box 37 by shaft, making the axis shaft 37a and the blade seat 34 rotate at high speed.

The end of the leading tube 38 facing the blade mill 32 penetrates into tube 31 with its below portion and connects with corresponding portions of tube lid 35 by buckling or fitting with its upper portion to let the internal spaces of tube 31 and leading tube 38 communicate with each other. A rotary tray 41 of the aforementioned brewing component 4 is exactly located in the corresponding place of the leading tube internal space outlet. A rotary plate 38a is connected by shaft at the place where leading tube 38 borders on blade mill 32. The rotary plate 38a contacts with the blade seat 34 perimeters and turns in opposite direction to the rotation of said blade seat34. Multiple leaves 38b are equipped with the rotary plate 38a.

Starting the grinding component 3, pour in the original materials from filling box 14 - coffee beans to roll into the grinding space 32c thanks to the bottom plain slope design by way of the entrance 36c and the screw connection 33a. The coffee beans will be cut continuously by the blade 34b into fine particles, which will roll along the walls of grinding space 32C to cracks in between the two blade mills 32a, 32b due to the de-centrifugal force caused by rotation of blade 34b. The second blade mill 32b rotates rapidly to work with the first blade mill 32a, which is not able to rotate to grind coffee particles into powers.

These coffee powders will be thrown out because of the cracks in between the two blade mills 32a and 32b and will fly toward rotary plate 38a. The rotating leaves of rotary plate 38a will force the coffee powders into the leading tube 38 to smoothly drop out from the leading tube outlet to the dial 41.

The design of rotary plate 38a is essential. Because the coffee powders after grinding are somewhat sticky, they will, generally speaking, attach on the inner walls of the leading tube 38 and be stuck in the path of leaving blade mills 32. The rotary plate 38a is equivalent to the blade seat 34 in rotary speed, which will reduce the time of contact between the coffee powders and leaves 38b. Even the coffee powders get stuck on the leaves 38b, they will be thrown away by the de-centrifugal force. Thus, the problem of jammed leading tube 38 can be effectively solved.

Secondly, the particle size of coffee powders can be adjusted. The adjuster 14a inside the aforesaid filling box 14 controls the self rotation of the adjustment knob 36b. With rotation of the adjustment knob 36b, the adjustment ring 36a rotates in the same direction. And the mill seat 33 connected by screws to the adjustment ring 36a along with the first blade mill 32a will carry out reciprocal movement in the screw connection 33a length direction. Such displacement movement will change the distance between the two blade mills 32a and 32b. And the distance will directly affect the particle size of the coffee powders being ground by the blade mills.

Figures 3□7 depicts the brewing component 4 compromising a dial 41, a pressing structure 7 and a grounds discharging structure (8) with a motor as the power source to operate the brewing component 4.

The dial 41 compromises a load bearing structure 41 a, a slope 41 b and a connection structure 41c connecting the two previous portions. The load bearing structure 41 a has an interlinking hole 41 d and a grounds discharging piece 42 lying horizontally on the top of the load bearing structure 41 a. The portion of the grounds discharging piece 42 matching the interlinking hole 41 d is a round hole in shape.

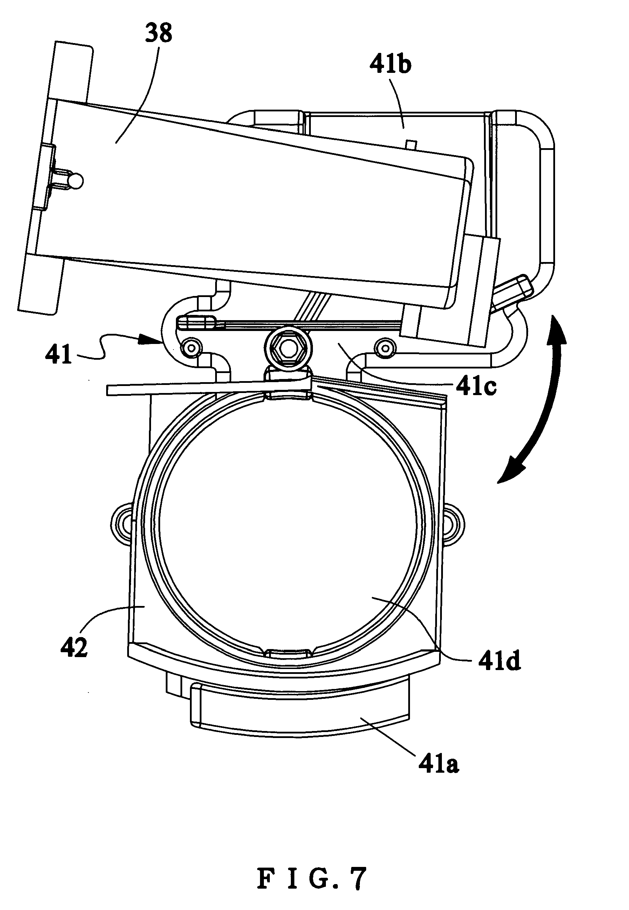

A rotating motor 43a makes the shaft connection 43 self rotate. The shaft connection 43 connects with the connection structure 41 of the dial41. With the rotation of shaft connection 43, the dial 41 as shown in Figure 7, will make the load bearing structure 41 a and the slope 41 b rotate in turn to the right below of the leading tube 38 outlet.

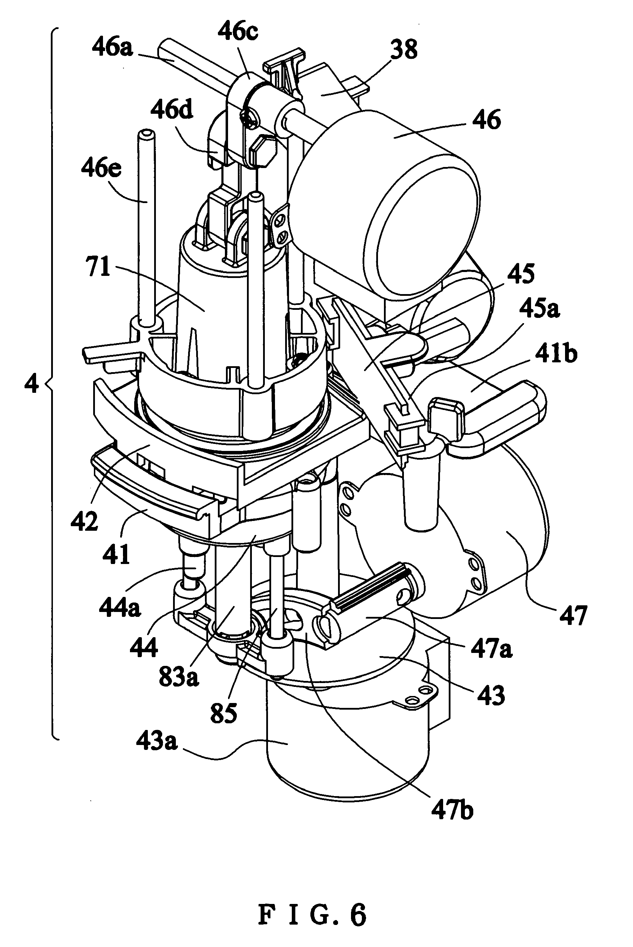

The interlinking hole 41 d of the load bearing structure 41 a as well as the grounds discharging piece 42 bear a brewing container 44, which has a discharging portion 44a as shown in Figure 6. With the rotation of dial 41, the brewing container 44 bearing the load bearing structure 41 a mainly functions:
receive coffee powders thrown out of the leading tube 38 outlet.

The brewing container 44 has a soft scraper blade 45 in its circuit clapped in the scraper blade 45 seat. The scraper blade seat 45a is fastened at the place neighboring the leading tube 38 outlet. When the brewing container 44 rotates with the dial 41, the scraper blade 45 will sweep across the tube outlet, producing the following effects:
First, coffee powders from the leading tube 38 are a loose pile having concentrated inside the brewing container 44. Portions of the powders standing higher than the container will be swept even by the scraper blade 45 to avoid splashing around in rotation.
Secondly, the post-brewing grounds will be pushed to the tube outlet.
   With the movement of the brewing container 44 to the below of the leading tube 38, the scraper blade 45 will again sweep across the brewing container 44 outlet and discharge the remaining coffee grounds, which will drop into box 13b of the aforementioned grounds/extracts unit 13 for the user to throw away. And the brewing container 44 having discharged the coffee grounds will have enough internal space to accept the coffee powders from the leading tube 38.

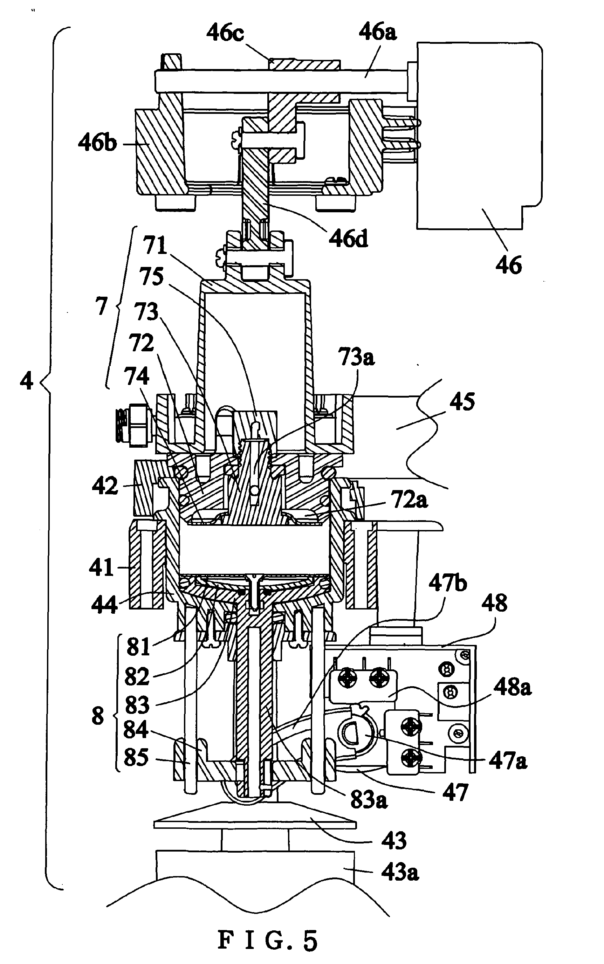

Figures 5 and 6 depict the pressing structure 7 compromising a pressing roller 71, a head 72, a bolt 73, a water dispensing plate 74 and an adapter 75.
Therein, the head 72 has an inside pipe 72a. And the head 72 is fastened in the outlet of the pressing roller 71, letting the pipe 72a connect with the pressing roller 71 inside.

The bolt 73 first passes the water dispensing plate 74, and then penetrates into pipe 72a. The water dispensing plate 74 penetrated by bolt 73 is densely punched with go-through holes. The side of said water dispensing plate 74 against head 72 seals the corresponding end of said pipe 72a.

The bolt 73 deeply penetrating into pipe 72a has an interlinked water passage 73a. The bolt 73 is connected with the adapter 75 inside the pressing roller 71. The adapter 75 leads the high pressure liquids from the aforementioned discharging valve24 to pipe 72a by water passages 73a to flow out by holes on said water dispensing plate 74.

A mandrel 46a of the pressing motor 46 is installed on a fastening stand 46b. Said mandrel 46a is fastened with a first connection shaft 46c, which is in elbow connection with a secondary connection shaft 73a. Said secondary connection shaft 73a is connected with the sealing end of the pressing roller 71. And the pressing structure 7 faces the brewing container 44 by head 72.

Said brewing container 44 receives the coffee powders from the leading tube 38 and rotates along with the dial41 to the below of the pressing structure 7. Started by the electric circuits, the pressing motor 46 allows the first connection shaft46c to rotate in the same direction with mandrel 46a, making the secondary connection shaft 73a in elbow status to move the pressing structure 7. Thanks to the three pressing leading columns 46e in between the fastening stand 46b and the pressing roller 71, the pressing roller 71 will be pushed by the secondary connection shaft to move downward.

The downward moving pressing roller 71 will make the head 72 deeply penetrate into the brewing container 44. At this time, the loosely concentrated coffee powders inside the brewing container 44 will be pushed tighter by head 72. The high pressure liquids flowing from holes on the water dispensing plate 74 rush into the pressed coffee powders will make coffee with flavors of original materials. Such high temperature liquid coffee will be poured out from the pouring portion 44a of the brewing container 44 to the aforementioned flow path 12a to cups placed in advance.

According to the above deliberations, the pressing structure 7 mainly penetrates into the brewing container 44 to form a closed space and press the loosely piled coffee powders inside the brewing container 44 tighter. Through introducing high temperature liquids into said space by high pressure, the coffee brewing operations are completed.

The aforementioned coffee making operations will leave coffee grounds in the closed space of the brewing container 44. Such coffee grounds will cause troubles to the next coffee making process and shall be discharged. The discharging operation shall be completed by the grounds discharging structure 8 of the aforementioned brewing component 4.

The grounds discharging structure 8 designed for the brewing container 44 has two major functions. First, it is used to remove the coffee powder residues inside the brewing container 44; and second, it is used to restore the internal space of the brewing container 44. In the practical implementation of the present invention, the grounds discharging structure8 shall be moved up to the outlet of the brewing container 44 as well as down to the bottom of the brewing container 44. Therefore, the grounds discharging structure8 can move up and down inside the brewing cansiter44.

Figures 5, 6 depict the grounds discharging structure 8 compromising at least a filter screen 81, a foam producing box and a push tray 83. Said push tray 83 plain contacts the bottom of the internal space of the brewing container 44. The side facing the container outlet is inverted to hold the foam producing box 82. The filter screen81 is placed on top of said foam producing box 82.
Both said filter screen81 and the foam producing box 82 are fastened on top of the push tray83.

The side of said push tray 83 in contact with the brewing container 44 has an extended supporting column 83a at the center. The end of said supporting column 83a cutting through the brewing container44 bottom is assembled with a push-and-pull seat 84. Said push-and-pull seat 84 is equipped with a grounds discharging diverting column 85 on its both sides. Said grounds-discharging diverting column85 is located on the bottom of the brewing container44.

The power source of said grounds discharging structure 8 is a push-and-pull motor 47. Said push-and-pull motor 47 is installed on the back of a switch stand 48. Said switch stand 48 moves synchronously with the rotation of dial41 or the brewing container 44. Its front lock has connections with multiple small movement switches 48a. Said small movement switch 48a is located within the effective range of a pressing shaft's self-rotary contact with the pressing point.

Said pressing shaft 47a is connected on top of the mandrel of the push-and-pull motor 47. Its end opposite to the motor has a sliding structure 47b, which is a long curved piece as, illustrated in the figure, connected with the push-and-pull seat 84 structurally by fitting. Said push-and-pull motor 47 makes the pressing shaft 47a self-rotate and press touch one of the multiple small movement switches 48a to send out messages to the electric circuits.

Generally, the grounds discharging structure 8 is located at the bottom of the brewing container 44. Therefore, said push-and-pull seat 84 will pull the push tray83 to contact the internal space bottom of the brewing container 44. When the electric circuit controls the aforementioned pressing structrue7 to outlet the brewing container 44, said push-and-pull motor 47 will be started to make the pressing shaft 47a self-rotate. The sliding structure 47b will self-rotate along with the pressing shaft 47a, pulling the push-and-pull seat 84 to move from the grounds discharging column 85 to the brewing container44.

The supporting column 83a move synchronously with the push-and-pull seat 84. Meanwhile, the filter screen 81 fastened on said push tray 83 move upward continuously to the brewing container 44 outlet. The grounds left on top of the filter screen 81 will be pushed out of the brewing container 44.

The electric circuit controls the rotation of the aforementioned rotation motor 43a, making the dial 41, the brewing container 44, the grounds discharging structure8, the switch stand 48 and the push-and-pull motor 47 rotate along. Set the scraper blade 45 of said leading tube 38 as still. The grounds discharging piece 42 in rotation will first touch the bottom edge of the scraper blade 45; next, the grounds pushed to the top of the brewing container 44 will be swept by the scraper blade 45 off the original place to drop down.

The dropped grounds concentrate on the grounds unit 13 below the shell 10. The electric circuit will control, according to the messages sent by the small movement switches 48a said push-and-pull motor 47 to rotate reversely.
Automatically, the pressing shaft 47a connecting the sliding structure 47b move synchronously, making the push-and-pull seat 84 far away from the brewing container 44 along the grounds discharging leading column 85. Meanwhile, the filter screen 81 fastened on the push tray 83 moves downward continuously, restoring the internal space of the brewing container 44 to its original holding status. The dial 41 moves back to the place of receiving powders from the leading tube 38 for the convenience of making another coffee by the brewing container 44.

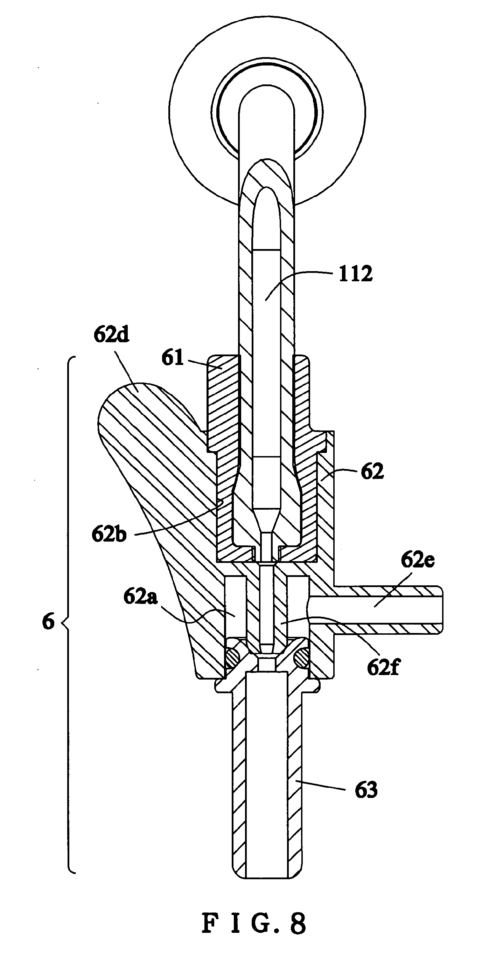

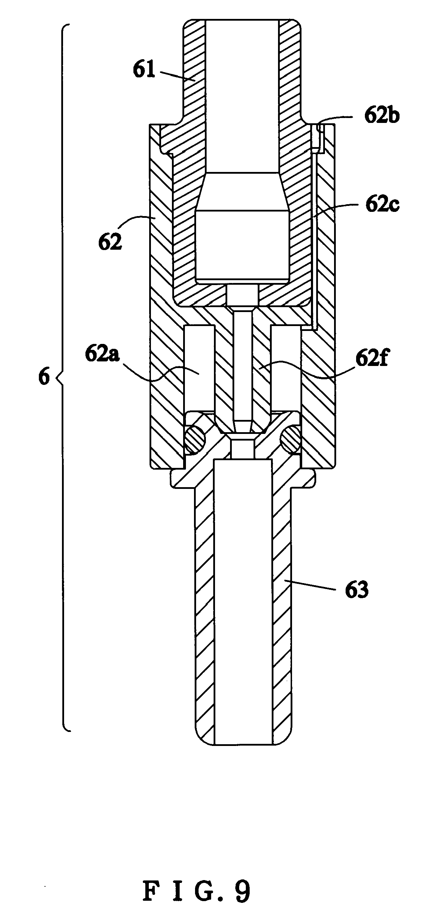

The coffee flowing into the cup can be added with milk foam. Said step has to be accomplished by the aforementioned foam-producing component 6 placed outside the shell 10. It can be seen from Figure 2 as well as Figures 8, 9 that the high pressure liquids shall flow to the outlet 12b through tube 111 by manual control of knob 11 b. Said outlet 12b has an air pipe 112 interlinked with tube 111, leading the high pressure liquids into said foam producing component 6.

As shown in the figure, the foam-producing component 6 compromises a flexible tube 61, a mixing tube 62 and an injection tube 63. The outlet end of the aforementioned air pipe 112 penetrates said flexible tube 61, which is connected with the mixing tube 62. Said mixing tube 62 is divided into two spaces internally. One of the spaces is jammed by the flexible tube 62 and the other space forms a closed mixing chamber 62a as for the penetrating injection tube 63.

The internal walls 62b of said mixing tube 62 and the outer edges of the flexible tube 61 form an air path 62c, one end of which is connected with the mixing chamber 62a while the other end communicates with the outside. Outside the mixing tube 62, there is an operational portion 62d of relative big area and a short connector. Said operational portion 62d makes it easy to control the mixing tube 62 while the short connector communicates the mixing chamber 62a with the outside. In addition, there is a transitional portion 62f in the extension of injection tube 63 inside the mixing tube 62. Said transitional portion located in the mixing chamber 62a leads the high pressure liquids in the air pipe 112 to the injection tube 63.

The short connector 62e is connected with a hose (not depicted in the figure), which can be plugged into any liquid milk product container. Due to the cracks in between the transitional portion62f end and the injection tube 63, when the high pressure liquids flow to the injection tube 63, the gases or liquid inside the mixing chamber 62a will be absorbed flushing to the injection tube 63 because of pressure change. Liquid milk products are no exception in such circumstances and will be absorbed to flow to the mixing chamber 62a. They will mix up with the high pressure liquids to form foams flowing out of the injection tube 63 to add foams on the coffee in the cup.

As the flexible tube61 of the foam producing component 6 is metallic and it contacts no milk product, dismantling for cleaning is not necessary.

The aforementioned implementation is only to deliberate on the technical contents of the present invention. Liquid transportation is absolutely needed in the process of making coffee or adding milk foam on the coffee by a coffee machine, therefore, structures similar to O-shaped rings can be applied in various components and places of connection to prevent liquid leakage or seepage.

In addition, messages received by the electric circuit can come from induction materials other than the aforementioned small movement switches such as light-electric sensors or physical sensors in similar structure to small movement switch.

## Claims

1. A coffee machine, compromising:
a heating component, which is controlled by electric circuit
contains a shell and a stove with a heater, which pours out high temperature liquids by high pressure in single direction;
a grinding component, which is controlled by electric circuit
compromises a self-rotary blade seat driven by a motor, two ring-shaped blade mills and a leading tube; the oppositely facing blade mills form a grinding space at the ring center; one blade mill is set in fixed state in the blade mill seat and the other is set in rotary stat; the end of the leading tube in the direction of the two blade mills is connected with a rotary plate by shaft, which receives powders from the two blade mills to the other end;
a brewing component, which is controlled by electric circuit
contains a motor-driven self-rotary dial, a brewing container moving along with the dial, a pressing structure and a grounds discharging structure; said grounds discharging structure contains a filter screen capable of moving inside the brewing container: by lowering said filter screen position inside the container, said brewing container can receive the powders from the leading tube while grounds inside said brewing container can be removed by raising said filter screen position inside the container, said pressing structure contains a head moving toward the filter screen, said head penetrates into the brewing container to press the powders and injects the high temperature liquids from the heating component; and
a foam producing component mixes up the pressed liquids inside
with exterior liquid milk products to produce foam;
operational stages are controlled by different motor actions; in the whole operational process, except for the grinding coffee beans noise, no action will make any noise.

2. The structure defined in Claim 1, comprising:
a control unit, which contains a keystroke panel sending out
messages to the electric circuit and a knob controlling the flow of pressed liquids into the aforementioned foam-producing component;
an injection unit, which communicates with said heating
component case;
a filling box, which contains an adjuster connecting with the
blade mill set in non-fixed state on the blade seat, able to adjust the space in between the two blade mills;
an end product unit, which contains an outlet and a flow path
allowing the liquids from the aforementioned brewing container to flow outside the shell; the exist contains an air pipe connecting with the aforementioned component; and
a grounds/extracts unit, which compromises a tray connecting
with a box to be pushed inside the shell to collect the discharged grounds.

3. A type of grinding component used in coffee machine, comprising:
a tube;
a leading tube, which communicates with the tube interiors and connects with a rotary plate by one end by shaft;
a set of blade mills inside the tube is composed of oppositely facing a first blade mill and a secondary blade mill; the two blade mills in ring shape form a grinding space at the ring center; and
a blade seat is inside the tube and is able to self-rotate when driven by motor; said blade seat is fixed with the second blade mill with an outstanding portion penetrating deeply into the grinding space at the center; the connection portion contains at least one blade, making said second blade mill make rotary movement against the first blade mill.

4. The structure defined in Claim 3, comprising:
a tube lid, which is fixed at the outlet on the top of the tube; one end of the leading tube is connected with the tube lid and the tube;
a mill seat, which is located inside the tube fixes the first blade mill; the side opposite to the blade mill contains a tube-like screw connection, which goes through the tube lid;
a fastening ring, which is fixed on top of said tube lid;
an adjustment ring sliding in between the tube lid and the fastening ring fits into the screw connection portion of the mill seat; and
an adjustment knob connected on top of the adjustment ring forms with the adjustment ring at least an entrance, which communicates with the aforementioned grinding space to let in the original materials for grinding.

5. A type of brewing component used in coffee machine, compromising at least:
a rotary plate contains a load bearing structure, a slope portion and a connection portion connecting the previous two portions; said load bearing structure contains a connection socket; the connection portion is connected with a motor-driven self-rotary shaft;
a brewing container to receive powder-like original materials is connected with said connection socket and moves along with the displacement of the rotary plate;
a pressing structure deeply penetrating into the brewing container to press the powders and inject the high temperature liquids; and
a grounds discharging structure moving inside the brewing container, which receives the powder by lowering the grounds discharging structure and removes the grounds by raising the grounds discharging structure.

6. The structure defined in Claim 5, wherein said pressing structure compromising:
a pressing roller;
an adapter, which is contained in the pressing roller to let out the high temperature liquids;
a head, which is fixed on the outlet of said pressing roller to deeply penetrate into the brewing container, said head contains a pipe, which communicates with the pressing roller interior with the outside;
a water dispensing plate against said head is densely dotted with punch holes, said water dispensing plate is fixed on the side opposite to the pipe facing the pressing roller; and
a bolt going through said water dispensing plate deeply penetrates into the pipe to communicate with said adapter; said bolt contains a water passage, ends of which are connected with the pipe and the adapter respectively.

7. The structure defined in Claim 6, wherein said pressing roller is connected at the close end with a second connection shaft, which is connected in elbow state with the first connection shaft; said first connection shaft is fixed on the mandrel of a pressing motor; said pressing roller contains at least one pressing leading column around, which is fixed on a fastening stand; said fastening stand supports the mandrel of the pressing motor.

8. The structure defined in Claim 5, wherein said grounds discharging structure compromising:
a filter screen;
a push tray, which is fixed on top of said push tray with a foam producing box set in between; and there is a supporting column on the side of said push tray in contact with the brewing container interior; said supporting column penetrates the bottom of the brewing container;
a push-and-pull seat, which is assembled with the supporting columns at the bottom of the brewing container;
a pressing shaft, which is connected with the mandrel of a push-and-pull motor, contains a sliding portion in the side opposite to the motor; said sliding portion makes the push-and-pull seat move by fitting; and
a soft scraper blade, which is set in an effective position in rotation route of the brewing container, is able to sweep the outlet of the brewing container.

9. The structure defined in Claim 8, wherein said push-and-pull seat is laterally connected with at least a grounds discharging leading column, which is located at the bottom of the brewing container.

10. A type of foam-producing component used in coffee machine, compromising at least:
a hose leading out the high pressure liquids;
an injection tube; and
a mixing pipe, which is internally divided into two spaces; one space is connected with said hose; the interior wall of the mixing pipe and the exterior edge of the hose form an air passage, one end of which communicates with the neighboring space of the mixing pipe and the other leads to the outside; said mixing pipe's outlet opposite to the hose and the penetrating tube form mixing chamber; said mixing chamber has an extended connect portion in the direction of the injection tube, leading the high pressure liquids into the injection tube; said mixing pipe has a short connector which connects the mixing chamber and the exterior.
